# FASCICULE DE BREVET EUROPEEN

(11) **EP 3 047 534 B1**
(45) Date de publication et mention de la délivrance du brevet: **14.11.2018**
(21) Numéro de dépôt: 14761896.1
(22) Date de dépôt: 11.09.2014
(51) Int. Cl.: H01M 10/625, H01M 10/6556, H01M 10/658, B60L 11/18, H01M 10/6567

(54) **DISPOSITIF DE REGULATION THERMIQUE D'UN PACK-BATTERIE**
WÄRMEREGELUNGSVORRICHTUNG FÜR BATTERIEPACK
BATTERY PACK THERMAL REGULATION DEVICE

(30) Priorité: 18.09.2013 FR 1358952
(43) Date de publication de la demande: 27.07.2016
(73) Titulaire: Valeo Systemes Thermiques, 78320 Le Mesnil Saint Denis (FR)
(72) Inventeur: PREVOST, Jean-Christophe, F-72270 Ligron (FR); BIREAU, Fabien, F-78280 Guyancourt (FR); MARCHADIER, Xavier, F-78320 Lévis-Saint-Nom (FR); MAHE, Christian, F-78490 Le Tremblay-sur-Mauldre (FR); TOURNOIS, Rémi, F-78690 Les Essarts-le-Roi (FR)
(74) Mandataire: Metz, Gaëlle
(86) Numéro de dépôt international: PCT/EP2014/069432
(87) Numéro de publication internationale: WO 2015/039952

(56) Documents cités:
- DE-A1-102010 038 681
- DE-A1-102011 003 535
- DE-A1-102011 052 513
- US-A1- 2010 190 049
- US-A1- 2012 129 018
- US-A1- 2013 189 558

## Description

La présente invention concerne un dispositif de régulation thermique d'un pack-batterie de véhicule automobile, et plus particulièrement un dispositif de régulation thermique d'une batterie de véhicule électriques et/ou hybrides, permettant de garantir un bon échange thermique entre la batterie et un échangeur thermique.

La régulation thermique de la batterie, notamment dans le domaine des véhicules électriques et hybrides, est un point important. En effet, la température de la batterie doit rester comprise entre 20° C et 40°C afin d'assurer la fiabilité, l'autonomie, et la performance du véhicule et d'optimiser la durée de vie de la batterie.

Dans les véhicules électriques et hybrides, la batterie comprend généralement plusieurs cellules de stockage d'énergie électrique reliées entre elles de façon à créer un générateur électrique de tension et de capacité désirée.

Ces cellules de stockage d'énergie électrique positionnées dans un boîtier de protection forment ce que l'on appelle un pack-batterie. Afin de réguler la température de la batterie, il est connu d'utiliser un dispositif de régulation thermique. Le dispositif de régulation thermique comprend un échangeur thermique positionné au contact de la batterie au fond du boîtier de protection et parcouru par un fluide caloporteur.

Le fluide caloporteur peut ainsi absorber la chaleur émise par chaque batterie afin de les refroidir ou selon les besoins, il peut lui apporter de la chaleur si la température de la batterie est insuffisante pour son bon fonctionnement.

Afin d'améliorer l'échange thermique entre la batterie et l'échangeur thermique, les dispositifs de régulation thermique de l'art antérieur proposent de positionner un ressort entre la multiplicité de tubes de l'échangeur thermique et le fond du boîtier de protection du pack-batterie. Le ressort poussant les tubes de l'échangeur thermique en direction du pack-batterie, ce qui garantit ainsi un meilleur contact entre les tubes de l'échangeur thermique et les cellules de stockage d'énergie électrique qui reposent dessus.

Cependant, dans le document DE 20 2012 102 969, le ressort étant réalisé en une seule pièce pour tous les tubes de l'échangeur thermique du pack-batterie, il est très volumineux et alourdit le pack-batterie. De plus, l'homogénéité des efforts est réalisée dans le sens de la longueur des tubes de l'échangeur thermique. Si les tubes de l'échangeur thermique ont une torsion dans le sens longitudinal, cette dernière ne pourra être redressée par le ressort, voire même augmentée. Par-ailleurs, le ressort qui est relié directement à la batterie pose un problème au niveau du changement de la batterie qui n'est pas facilité.

De plus, aucun des dispositifs de régulation thermique de l'art antérieur ne résout le problème de conductivité thermique entre les différents éléments métalliques du pack-batterie responsable d'une déperdition de l'échange thermique entre la batterie et l'échangeur thermique ainsi que le problème de risque de corrosion par effet pile entre ces différents éléments représentant une cause de défaillance de la batterie. US 2013/0189558 divulgue un dispositif de régulation thermique d'un pack-batterie.

L'invention vise à proposer un dispositif de régulation thermique d'une batterie de véhicule automobile permettant de pallier un ou plusieurs inconvénients de l'art antérieur en optimisant les coûts de fabrication.

À cet effet, l'invention a pour objet un dispositif de régulation thermique d'un pack-batterie pour véhicule automobile comprenant au moins une batterie contenue dans un boîtier, le dispositif de régulation thermique comportant:
- au moins un échangeur thermique en contact avec la batterie,
- au moins un élément élastique disposé au fond du boîtier afin de maintenir l'échangeur thermique contre la batterie,
caractérisé en ce qu'un isolant est interposé entre l'élément élastique et l'échangeur thermique, l'isolant étant réalisé sous forme d'une pièce moulée en matière plastique, l'échangeur thermique comprenant des tubes caractérisé en ce que l'isolant est fixé à chaque tube de l'échangeur thermique, l'isolant recouvrant la surface du tube qui est opposée à celle qui est en contact avec la batterie, la pièce moulée en matière plastique comprenant des crochets élastiques de fixation de la pièce moulée en matière plastique au tube.

Ledit dispositif de régulation thermique peut en outre comporter un ou plusieurs des aspects suivants, pris séparément ou en combinaison :
Selon un autre aspect de l'invention, la pièce moulée en matière plastique est réalisée en polypropylène ou en polyamide chargé en fibre de verre, tel qu'un PA6,6GF30 par exemple, permettant de garantir une bonne isolation thermique et électrique de la batterie.

Selon un autre aspect de l'invention, l'isolant présente des entretoises permettant d'assurer une isolation thermique supplémentaire par lame d'air du tube.

Selon un autre aspect de l'invention, les entretoises de l'isolant comprennent des nervures longitudinales, contribuant à la rigidité de l'isolant.

Selon un autre aspect de l'invention, l'élément élastique comprend au moins une pièce ressort en tôle découpée et pliée, contribuant à l'optimisation du coût de fabrication de la pièce ressort.

Selon un autre aspect de l'invention, la pièce ressort présente une forme longitudinale rectangulaire de section transversale en U, comprenant une pluralité de pattes d'appui de forme tronconique dont le sommet est parallèle à la largeur de la pièce ressort et forment des traverses de rigidification, permettant de garantir un appui continu dans le sens longitudinal et transversal du tube.

Selon un autre aspect de l'invention, les extrémités libres en U de la pièce ressort sont repliées l'une vers l'autre pour coopérer avec des rainures complémentaires latérales de la pièce moulée en matière plastique permettant une connexion mécanique entre la pièce ressort et la pièce moulée en matière plastique.

Selon un autre aspect de l'invention, la pièce ressort présente en coupe transversale une forme tronconique, permettant de garantir un appui continu dans le sens longitudinal et transversal du tube.

Selon un autre aspect de l'invention, la pièce ressort présente un tronc central longitudinal comprenant une multiplicité de pattes d'appui élastiques dirigées vers le fond du boîtier du pack-batterie. Cette structure découpée permet d'alléger le poids de la pièce ressort.

Selon un autre aspect de l'invention, les pattes d'appui élastiques de la pièce ressort sont réparties en quinconce, de part et d'autre du tronc central de ladite pièce ressort. Cette variante de réalisation permet de réduire la perte de matière lors de la découpe de la pièce ressort à un minimum.

Selon un autre aspect de l'invention, la pièce ressort comprend des moyens d'assemblage pour coopérer avec des moyens d'assemblage complémentaires de la pièce moulée en matière plastique avec laquelle ladite pièce ressort est raccordée, favorisant l'assemblage des deux pièces de manière simplifiée, sans l'utilisation de matière adhésive.

Selon un autre aspect de l'invention, les moyens d'assemblage complémentaires de la pièce moulée en matière plastique comprennent des ergots permettant l'assemblage des deux pièces par coulissement.

Selon un autre aspect de l'invention, les moyens d'assemblage complémentaires de la pièce moulée en matière plastique comprennent des cliquets permettant l'assemblage des deux pièces par coulissement.

Selon un autre aspect de l'invention, les moyens d'assemblage complémentaires de la pièce moulée en matière plastique comprennent des tiges élastiques permettant une fixation par encliquetage avec la pièce ressort.

Enfin, l'invention concerne un pack-batterie pour véhicule automobile, comprenant une batterie positionnée dans un boîtier, comportant un dispositif de régulation thermique tel que défini précédemment.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 est une vue schématique de côté en coupe transversale d'un pack-batterie.
- la figure 2 est une vue en coupe transversale de l'isolant selon un mode de réalisation.
- les figures 3a et 3b sont une vue en perspective de la pièce moulée en matière plastique selon des variantes de réalisation.
- La figure 4 est une vue en perspective d'un tube assemblé avec une pièce moulée en matière plastique et une pièce ressort.
- la figure 5 est une vue en perspective de l'élément élastique selon un premier mode de réalisation.
- la figure 6 est une vue en perspective de la pièce moulée en matière plastique assemblée avec la pièce ressort de la figure 5.
- la figure 7 est une vue en perspective de détail de l'assemblage de la pièce moulée en matière plastique avec la pièce ressort de la figure 5.
- la figure 8 est une vue en perspective de la pièce ressort selon un deuxième mode de réalisation.
- la figure 9 est une vue en perspective de la pièce ressort selon un troisième mode de réalisation.
- la figure 10a est une vue en perspective de la pièce ressort selon un quatrième mode de réalisation.
- les figures 10b et 10c sont une vue schématique de détail sur les moyens d'assemblage de la pièce moulée en matière plastique avec la pièce ressort selon une première variante de réalisation.
- les figures 11a, 11b et 11c sont une vue schématique de détail sur les moyens d'assemblage de la pièce moulée en matière plastique avec la pièce ressort selon une deuxième variante de réalisation.
- Les figures 12a et 12b sont une vue schématique de détail sur les moyens d'assemblage de la pièce moulée en matière plastique avec la pièce ressort selon une troisième variante de réalisation.

Sur toutes les figures, les éléments identiques portent les mêmes numéros référence.

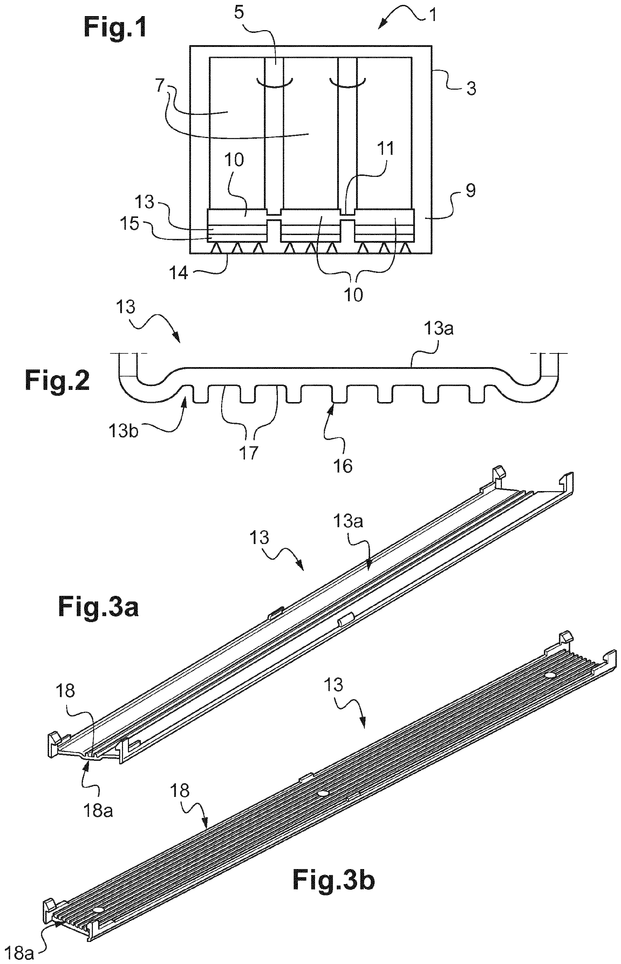

La figure 1 est une vue schématique de côté en coupe transversale d'un pack- batterie 1. Le pack-batterie 1 comprend un boîtier 3 dans lequel est positionnée une batterie 5, généralement composée d'une ou plusieurs cellules de stockage d'énergie ou accumulateurs 7 reliés entre elles, en parallèle ou en série de façon à créer un générateur électrique de tension et de capacité désirée.

Les cellules de stockage d'énergie 7 peuvent présenter une forme de section parallélépipédique à quatre faces. La batterie 5 ainsi formée présente la forme d'une boite rectangulaire à quatre côtés.

De manière avantageuse, si la batterie comprend plusieurs cellules de stockage, par exemple trois cellules de stockage comme le montre la figure 1, l'échangeur thermique 9 comprendra le même nombre de tubes 10. Ces tubes 10 sont des tubes plats multicanaux qui sont raccordés entre eux par un collecteur 11 permettant d'acheminer un fluide caloporteur.

Le fait d'optimiser le nombre de tubes 10 au même nombre de cellules d'énergie de stockage 7 comprises dans la batterie 5 permet de minimiser le poids de l'échangeur thermique 9 et de ce fait le poids total du pack-batterie 1.

Un élément élastique 15 est disposé au fond 14 du boîtier 3 du pack-batterie 1 afin de maintenir l'échangeur thermique contre la batterie.

Un isolant 13 est interposé entre l'élément élastique 15 et l'échangeur thermique 9.

De manière avantageuse, si l'échangeur thermique 9 comprend plusieurs tubes 10, un isolant 13 est prévu pour chaque tube 10. Cette configuration autorisant un découplage des fixations de chacun des tubes 10 à un isolant 13 permet de réduire les risques de mauvais contact dû aux précisions d'assemblage de chaque élément.

L'isolant 13 repose sur l'élément élastique 15 qui lui est raccordée mécaniquement, ledit élément élastique 15 reposant lui-même sur le fond 14 du boîtier 3. Dans la configuration avec plusieurs tubes 10, un élément élastique 15 est raccordé à chaque isolant 13 montées sur chacun des tubes 10.

L'isolant 13 et l'élément élastique 15 forment ainsi pour chaque tube 10 de l'échangeur thermique 9 du pack-batterie 1 un support qui est nommé « spring-bar ». Le spring-bar » assure le rôle de compression de chaque tube 10 sur la batterie 5 de façon indépendante afin de réduire le poids et les coûts de la solution d'ensemble.

La figure 2 montre une vue en coupe transversale de l'isolant 13 selon un exemple de réalisation. Avantageusement, l'isolant 13 est une pièce moulée en matière plastique réalisée par injection plastique.

La pièce moulée en matière plastique 13 est un plastique de faible conductivité thermique. La matière plastique est par exemple du polypropylène ou du polyamide chargé en fibre de verre, tel que du PA6.6 GF30 qui est un plastique de conductivité thermique moyenne mais résistant au fluage dans un environnement sous contraintes, qu'il s'agisse de contraintes tant thermiques que d'acidité. Le PA6.6GF30 est un polyamide 6.6 renforcé 30 % de fibres de verre. La pièce moulée en matière plastique 13 présente une section transversale en U ouvert pour recevoir sur sa face supérieure 13a, le tube 10 de l'échangeur thermique 9.

Comme représenté sur la figure 2, la pièce moulée en matière plastique 13 possède sur sa face inférieure 13b des entretoises 16, permettant d'assurer une isolation thermique supplémentaire par lame d'air du tube 10 dans les interstices 17 entre les entretoises 16.

Selon une variante de réalisation représentée figures 3a, 3b, lesdites entretoises 16 comprennent des nervures longitudinales 18 réalisées sur la face 13a destinée à être en contact avec le tube 10.

Les nervures longitudinales 18 peuvent également être réalisées sur la face inférieure 13b ou supérieure 13a de la pièce moulée en matière plastique 13. Les nervures longitudinales 18 peuvent recouvrir partiellement la surface de la pièce moulée en matière plastique 13 comme représenté figure 3a ou la totalité de la surface comme représenté figure 3b.

Selon la figure 3a, les nervures longitudinales 18 s'étendent en partie médiane de la pièce moulée 13, sur l'intégralité de sa longueur.

Ces nervures 18 sont débouchantes aux extrémités 18a pour permettre l'évacuation des condensats.

Selon une autre variante de réalisation non représentée, les entretoises 16 peuvent être des simples ergots faisant saillies de la face inférieure 13b ou de la face supérieure 13a de la pièce moulée en matière plastique 13.

L'avantage que présentent les nervures longitudinales 18 par-rapport aux ergots est de conférer à la pièce moulée en matière plastique 13 une meilleure rigidité.

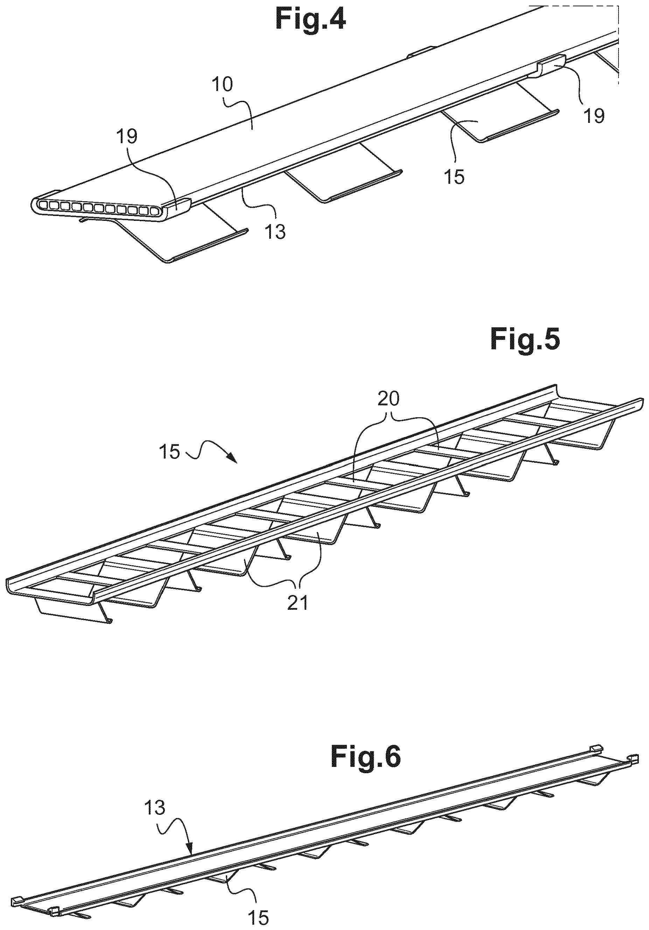

La figure 4 montre une vue en perspective du tube 10 assemblé avec une pièce moulée en matière plastique 13 et un élément élastiquel5. La pièce moulée en matière plastique 13 comprend des crochets élastiques 19 de fixation de la pièce moulée en matière plastique 13 au tube 10. Lesdits crochets élastiques 19 sont positionnés aux deux extrémités de la longueur de la pièce moulée en matière plastique 13 ou en différents points de sa longueur et prennent en tenaille le rayon des tubes 10 pour ne pas dépasser sur la surface du tube 10 en contact avec la cellule de stockage d'énergie 7 de la batterie 5.

De manière avantageuse, la pièce moulée en matière plastique 13 recouvre la surface du tube 10 qui est opposée à celle qui est en contact avec la batterie 5, garantissant un meilleur maintien du tube 10 ainsi qu'une isolation électrique et thermique du tube 10 optimales.

L'épaisseur de la pièce moulée en matière plastique 13 est comprise entre 1 et 1,5 mm pour contribuer à la rigidité de la pièce et à son rôle d'isolation thermique.

La pièce moulée en matière plastique 13 joue ainsi deux rôles, elle permet d'une part d'isoler électriquement l'échangeur thermique 9 des autres éléments métalliques du pack-batterie, évitant ainsi les risques de corrosion par effet pile entre ces éléments et d'autre part, d'isoler thermiquement l'échangeur thermique 9 des autres éléments du pack-batterie participant ainsi à l'optimisation de l'échange thermique recherchée entre la batterie 5 et ledit échangeur thermique 9.

La figure 5 montre une vue en perspective de l'élément élastique 15 selon un premier mode de réalisation.

L'élément élastique 15 est une pièce ressort en tôle découpée et pliée, par exemple en acier inoxydable, d'épaisseur comprise entre 0,1 mm et 0,4 mm avec des optimums à 0,2 et 0,3 mm selon les standards du commerce. Le choix de l'épaisseur de la pièce ressort dans les standards du commerce a été fait de manière judicieuse, afin de garantir une force de compression pour un ressort en fin de vie dans les tolérances de compression permettant une force de compression suffisante pour maintenir continuellement le contact entre l'échangeur thermique 9 et la batterie 5.

D'autre part, le choix d'épaisseur standard de matière contribue à l'optimisation du coût de fabrication de la pièce ressort 15.

Comme visible sur la figure 5, la pièce ressort 15 présente une forme longitudinale rectangulaire de section transversale en U, découpée afin de réduire le poids de la pièce tout en gardant la matière nécessaire garantissant la force de compression à transmettre à la pièce moulée en matière plastique 13 qui lui est raccordée. La pièce ressort 15 comprend ainsi une pluralité de traverses 20 et de pattes d'appui 21 réparties sur toute la longueur de la pièce ressort 15.

Les pattes d'appui 21 identiques de forme tronconique sont réparties à des intervalles réguliers sur la totalité de la longueur de la pièce ressort 15 et forment des traverses de rigidification. Le sommet des pattes d'appui est parallèle à la largeur de la pièce ressort 15. La répartition à intervalle régulier des pattes d'appui 21 sur la totalité de la longueur de la pièce ressort 15 permet de garantir un appui continu dans le sens longitudinal et transversal du tube 10.

Le dessin de la fibre neutre de chaque pattes d'appui 21 de la pièce ressort 15 est spécialement dessiné afin de correspondre à la force de compression voulue dans tous les cas de serrage des batteries. Le dessin de la fibre neutre peut être assimilé à la section d'un des ressorts dans sa position nominale. Le dessin de la fibre neutre de chaque ressort est adapté spécifiquement aux contraintes dimensionnelles de l'ensemble de composant constituant le pack-batterie. Le dessin de la fibre tient ainsi compte de la chaîne de côtes avec et sans compression, mais aussi à la force de compression voulue. Par force de compression voulue, il faut entendre une force de réaction qui n'excède pas la force de serrage des différents éléments d'assemblage pour l'ensemble du pack batterie.

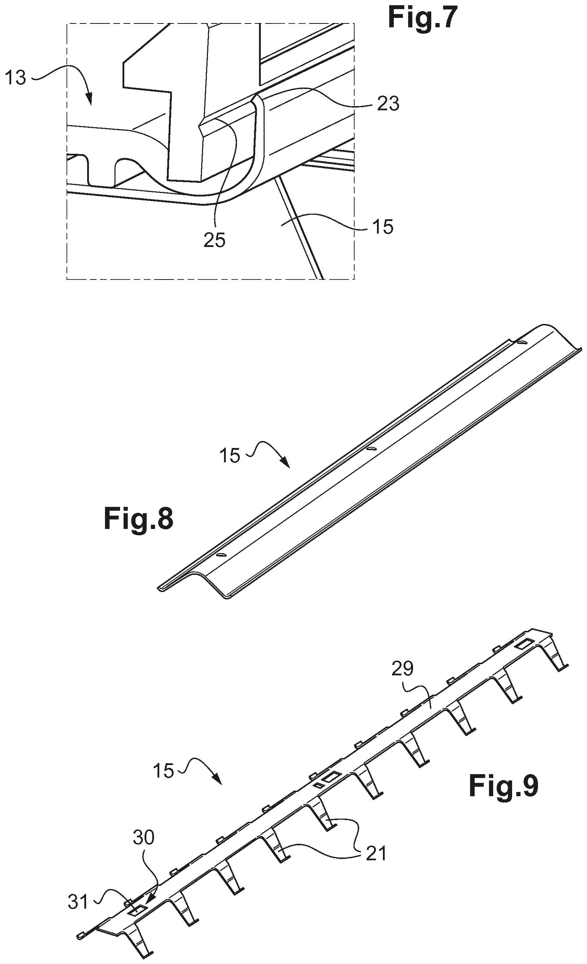

Comme le montre la figure 6, de manière avantageuse, la surface de la pièce ressort 15 est équivalente à la surface de contact de la pièce moulée en matière plastique 13 qui lui est raccordée. Cette configuration permet à la pièce ressort 15 de transmettre une force de compression homogène sur la totalité de la surface de la pièce moulée en matière plastique 13 qui lui est raccordée. Telle que représenté sur la figure 7, les extrémités libres 23 en U de la pièce ressort 15 sont repliées l'une vers l'autre pour coopérer avec des rainures complémentaires latérales 25 de la pièce moulée en matière plastique 13 permettant une connexion mécanique entre la pièce ressort 15 et la pièce moulée en matière plastique 13. Les deux pièces sont ainsi assemblées par encliquetage de l'une avec l'autre. Ce type de montage évitant l'utilisation de produit adhésif double face contribue à une simplification de montage et de ce fait à un gain en coût des pièces fabriquées. Tout autre moyen d'assemblage tel que le sertissage, ou autre moyen équivalent évitant l'utilisation de produit adhésif peut néanmoins être utilisé.

Par-ailleurs, les extrémités libres 23 de la pièce ressort 15 qui sont repliées l'une vers l'autre confèrent à la pièce ressort 15 une rigidité nécessaire contribuant à l'homogénéité de la force de compression qui est transmise sur toute la surface de contact de la pièce plastique 13 qui lui est raccordée.

Selon un deuxième mode de réalisation représentée figure 8, la pièce ressort 15 présente en coupe transversale une forme tronconique.

Selon un troisième mode de réalisation représentée figure 9, la pièce ressort 15 présente un tronc central longitudinal 29 comprenant une multiplicité de pattes d'appui 21 élastiques dirigées vers le fond du boitier 3 du pack-batterie 1.

Lesdites pattes d'appui 21 sont réparties en vis à vis, de part et d'autre du tronc central longitudinal 29 de la pièce ressort 15, et à des intervalles réguliers sur la totalité de la longueur de la pièce ressort 15. Cette structure découpée permet d'alléger le poids de la pièce ressort 15.

Le tronc central 29 de la pièce ressort 15 présente une forme longitudinale rectangulaire et comprend plusieurs moyens d'assemblage 30 sous la forme de découpes rectangulaires 31 réparties à intervalle régulier sur la longueur de la pièce ressort 15 et dont la forme est complémentaire au moyen d'assemblage 32 prévu à la surface de contact de la pièce moulée en matière plastique 13 avec laquelle elle est raccordée.

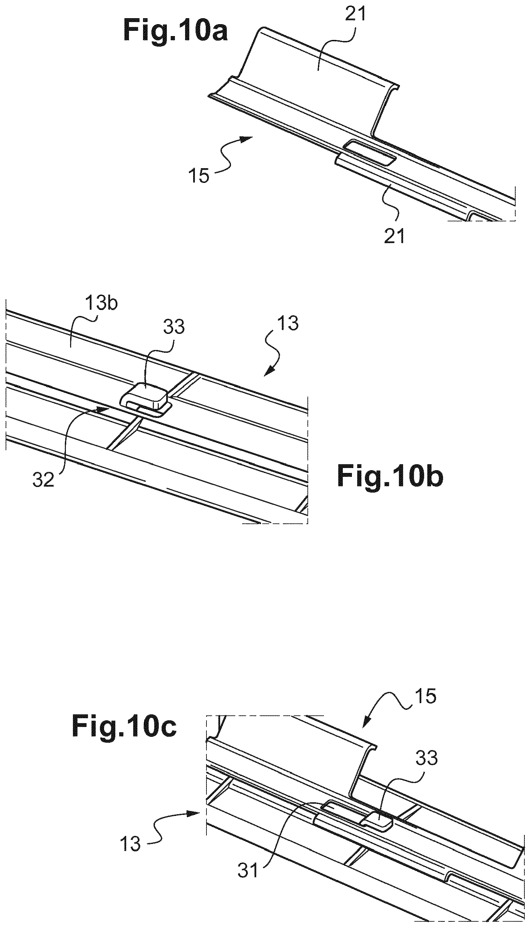

La figure 10a présente un quatrième mode de réalisation de la pièce ressort 15, dans laquelle les pattes d'appui 21 sont découpées en quinconce. Cette variante de réalisation permet de gagner environ 1/3 sur la matière engagée pour un « spring bar » conçu pour un seul tube 10 et de réduire l'engagement de matière à un minimum.

La découpe de la pièce ressort 15 est la recherche d'un optimum entre le poids de la pièce ressort 15 et l'homogénéité de la force de compression qu'elle doit transmettre au travers de la pièce moulée en matière plastique 13 au tube 10 afin de garantir une efficacité optimale de l'échange thermique entre le tube 10 et la cellule de stockage d'énergie 7 de la batterie 5 qui est en contact.

La pièce ressort 15 ainsi conçue a pour rôle d'assurer un contact du tube 10 avec la cellule de stockage d'énergie 7 de la batterie 5 qui est en contact, dans toutes les conditions de jeux qui sont mises en oeuvre lors de l'assemblage des différents éléments dans le pack-batterie 1.

La figure 10b montre la face inférieure 13b de la pièce moulée en matière plastique 13. Les moyens d'assemblage 32 de la pièce moulée en matière plastique 13 complémentaires aux moyens d'assemblage 30 prévus sur la pièce ressort 15 selon la variante de réalisation où la pièce ressort présente plusieurs découpes rectangulaires 31 se présentent sous la forme d'ergots 33.

Comme représenté à la figure 10c, l'assemblage de la pièce ressort 15 avec la pièce moulée en matière plastique 13 se fait par coulissement des ergots 33 dans les découpes 31 de la pièce ressort 15.

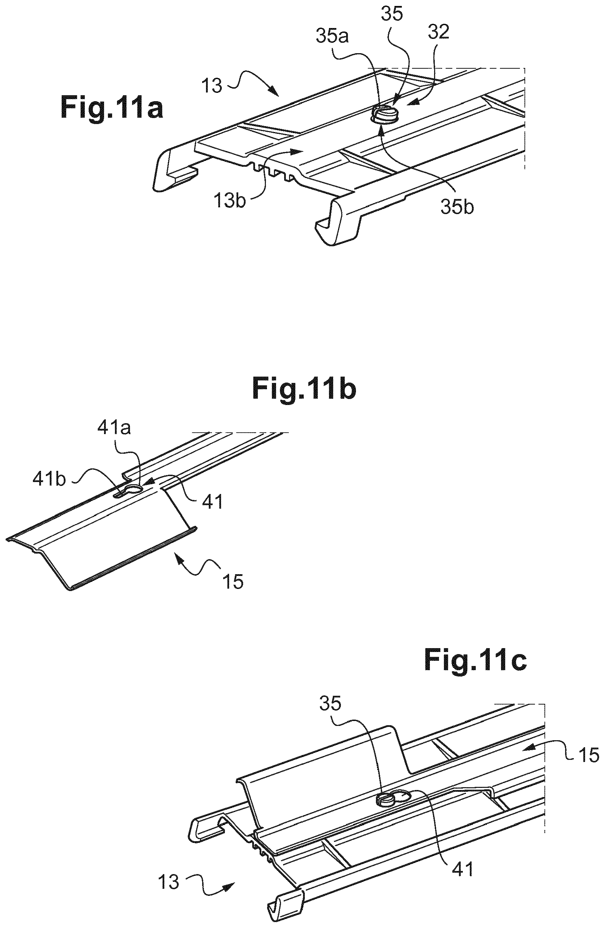

Les figures 11a, 11b, et 11c présentent une deuxième variante de réalisation des moyens d'assemblage de la pièce moulée en matière plastique 13 avec la pièce ressort 15. Comme représenté sur la figure 11a, les moyens d'assemblage 32 positionnés sur la face inférieure 13b de la pièce moulée en matière plastique 13 qui est en contact avec la pièce ressort 15 comprennent des cliquets 35 présentant une tête 35a et une rainure 35b à leur embase.

Les moyens d'assemblage 30 complémentaires prévus sur la pièce ressort 15, comme représenté figure 11b, 11c, comprennent des trous oblongs 41. Les trous oblongs 41 présentent deux parties distinctes, une partie large 41a autorisant l'insertion de la tête 35a du cliquet 35 de la pièce moulée en matière plastique 13 et une partie plus étroite 41b garantissant le serrage de l'embase du cliquet après glissement de la rainure 35b dans la partie plus étroite 41b du trou oblong 41.

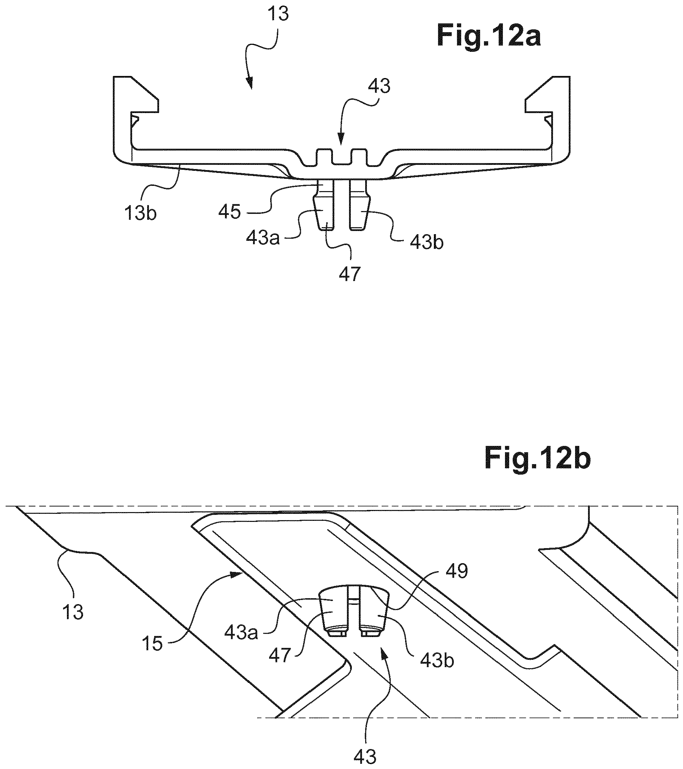

Les figures 12a, 12b présentent une troisième variante de réalisation des moyens d'assemblage de la pièce moulée en matière plastique 13 avec la pièce ressort 15. Comme représenté à la figure 12a, les moyens d'assemblage positionnés sur la face inférieure 13b de la pièce moulée en matière plastique 13 en contact avec la pièce ressort comprennent des tiges 43 élastiques permettant une fixation par encliquetage avec la pièce ressort 15.

Les tiges 43 sont découpées dans le sens de la longueur en deux parties distinctes 43a et 43b adjacentes l'une à l'autre et séparées par un espace. Les deux parties 43a et 43b, se présentent sous la forme d'un tronc 45 et une tête 47 de forme triangulaire.

Comme représenté à la figure 12b, les moyens d'assemblage 30 complémentaires prévus sur la pièce ressort 15 comprennent des trous 49. L'assemblage de la pièce ressort 15 avec la pièce moulée en matière plastique 13 se fait par insertion des tiges 43 dans les trous 49. L'insertion de la tête 47 de la tige 43 dans le trou 49 se fait par serrage des deux parties 43a et 43b. Une fois inséré dans le trou 49, le relâchement des deux partie entraîne leur écartement ainsi les tiges peuvent être insérées dans les trous mais ne peuvent pas en être retirées accidentellement.

On comprend donc que l'utilisation conjointe d'une pièce moulée en matière plastique 13 et d'une pièce ressort 15 pour garantir un meilleur contact entre les tubes 10 de l'échangeur thermique 9 avec les cellules de stockage d'énergie 7 de la batterie 5 permet à la fois de garantir une bonne performance d'échange thermique entre l'échangeur thermique 9 et la batterie 5 mais également d'assurer une isolation électrique des tubes 10 des autres éléments de la batterie 5.

Par-ailleurs, le découplage de l'assemblage de chacun des tubes 10 à une pièce moulée en matière plastique 13 et une pièce ressort 15 permet non seulement d'optimiser la précision d'assemblage de l'ensemble des pièces du pack-batterie mais également de réduire le poids et les coûts de fabrication de la solution d'ensemble.

## Revendications

1. Dispositif de régulation thermique d'un pack-batterie (1) pour véhicule automobile comprenant au moins une batterie (5) contenue dans un boîtier (3), le dispositif de régulation thermique comportant:
- au moins un échangeur thermique (9) en contact avec la batterie (5),
- au moins un élément élastique (15) disposée au fond (14) du boîtier (3) afin de maintenir l'échangeur thermique (9) contre la batterie (5),
**caractérisé en ce qu'**un isolant (13) est interposé entre l'élément élastique (15) et l'échangeur thermique (9), l'isolant (13) étant réalisé sous forme d'une pièce moulée en matière plastique, l'échangeur thermique (9) comprenant des tubes (10) **caractérisé en ce que** l'isolant (13) est fixé à chaque tube (10) de l'échangeur thermique (9), l'isolant (13) recouvrant la surface du tube (10) qui est opposée à celle qui est en contact avec la batterie (5), la pièce moulée en matière plastique (13) comprenant des crochets élastiques (19) de fixation de la pièce moulée en matière plastique (13) au tube (10).

2. Dispositif de régulation thermique d'un pack-batterie (1) pour véhicule automobile selon la revendication 1, **caractérisé en ce que** la pièce moulée en matière plastique (13) est réalisée en polypropylène ou en polyamide chargé en fibre de verre.

3. Dispositif de régulation thermique d'un pack-batterie (1) pour véhicule automobile selon l'une quelconque des revendication 1 ou 2, **caractérisé en ce que** l'isolant (13) présente des entretoises (16) permettant d'assurer une isolation thermique supplémentaire par lame d'air du tube (10).

4. Dispositif de régulation thermique d'un pack-batterie (1) pour véhicule automobile selon la revendication 3, **caractérisé en ce que** les entretoises (16) de l'isolant (13) comprennent des nervures longitudinales (18).

5. Dispositif de régulation thermique d'un pack-batterie (1) pour véhicule automobile selon l'une quelconque des revendications 1 à 4, **caractérisé en ce que** l'élément élastique (15) comprend au moins une pièce ressort en tôle découpée et pliée.

6. Dispositif de régulation thermique d'un pack-batterie (1) pour véhicule automobile selon la revendication 5, **caractérisé en ce que** la pièce ressort (15) présente une forme longitudinale rectangulaire de section transversale en U, comprenant une pluralité de pattes d'appui (21) de forme tronconique dont le sommet est parallèle à la largeur de la pièce ressort (15) et forment des traverses de rigidification.

7. Dispositif de régulation thermique d'un pack-batterie (1) pour véhicule automobile selon la revendication 5 ou 6, **caractérisé en ce que** les extrémités libres en U (23) de la pièce ressort (15) sont repliées l'une vers l'autre pour coopérer avec des rainures complémentaires latérales (25) de la pièce moulée en matière plastique (13) permettant une connexion mécanique entre la pièce ressort (15) et la pièce moulée en matière plastique (13).

8. Dispositif de régulation thermique d'un pack-batterie (1) pour véhicule automobile selon l'une quelconque des revendications 1 à 5, **caractérisé en ce que** la pièce ressort (15) présente en coupe transversale une forme tronconique.

9. Dispositif de régulation thermique d'un pack-batterie (1) pour véhicule automobile selon l'une quelconque des revendications 1 à 5, **caractérisé en ce que** la pièce ressort (15) présente un tronc central (29) longitudinal comprenant une multiplicité de pattes d'appui (21) élastiques dirigées vers le fond (14) du boîtier (3) du pack-batterie (1).

10. Dispositif de régulation thermique d'un pack-batterie (1) pour véhicule automobile selon la revendication 9, **caractérisé en ce que** les pattes d'appui (21) élastiques de la pièce ressort (15) sont réparties en quinconce, de part et d'autre du tronc central (29) de ladite pièce ressort (15).

11. Dispositif de régulation thermique d'un pack-batterie pour véhicule automobile selon l'une quelconque des revendications 1 à 10, **caractérisé en ce que** la pièce ressort (15) comprend des moyens d'assemblage (30) pour coopérer avec des moyens d'assemblage complémentaires (32) de la pièce moulée en matière plastique (13) avec laquelle ladite pièce ressort (15) est raccordée.

12. Pack-batterie (1) pour véhicule automobile, comprenant une batterie (5) positionnée dans un boîtier (3), comportant un dispositif de régulation thermique selon l'une quelconque des revendications précédentes.

## Patentansprüche

1. Wärmeregulierungsvorrichtung eines Batteriepacks (1) für ein Kraftfahrzeug, umfassend wenigstens eine Batterie (5), die in einem Gehäuse (3) enthalten ist, wobei die Wärmeregulierungsvorrichtung beinhaltet:
- wenigstens einen Wärmetauscher (9) in Kontakt mit der Batterie (5),
- wenigstens ein elastisches Element (15), das am Boden (14) des Gehäuses (3) angeordnet ist, um den Wärmetauscher (9) an der Batterie (5) zu halten,
**dadurch gekennzeichnet, dass** ein Isolationsmittel (13) zwischen dem elastischen Element (15) und dem Wärmetauscher (9) angeordnet ist, wobei das Isolationsmittel (13) in Form eines Formteils aus Kunststoff ausgeführt ist, wobei der Wärmetauscher (9) Rohre (10) umfasst, **dadurch gekennzeichnet, dass** das Isolationsmittel (13) an jedem Rohr (10) des Wärmetauschers (9) befestigt ist, wobei das Isolationsmittel (13) die Oberfläche des Rohrs (10) bedeckt, die jener entgegengesetzt ist, die sich in Kontakt mit der Batterie (5) befindet,
wobei das Formteil aus Kunststoff (13) elastische Haken (19) zur Befestigung des Formteils aus Kunststoff (13) an dem Rohr (10) umfasst.

2. Wärmeregulierungsvorrichtung eines Batteriepacks (1) für ein Kraftfahrzeug nach Anspruch 1, **dadurch gekennzeichnet, dass** das Formteil aus Kunststoff (13) aus Polypropylen oder aus glasfaserverstärktem Polyamid hergestellt ist.

3. Wärmeregulierungsvorrichtung eines Batteriepacks (1) für ein Kraftfahrzeug nach einem der Ansprüche 1 oder 2, **dadurch gekennzeichnet, dass** das Isolationsmittel (13) Versteifungen (16) aufweist, die es ermöglichen, eine zusätzliche Wärmisolierung des Rohrs (10) durch Luftzwischenräume zu gewährleisten.

4. Wärmeregulierungsvorrichtung eines Batteriepacks (1) für ein Kraftfahrzeug nach Anspruch 3, **dadurch gekennzeichnet, dass** die Versteifungen (16) des Isolationsmittels (13) Längsrippen (18) umfassen.

5. Wärmeregulierungsvorrichtung eines Batteriepacks (1) für ein Kraftfahrzeug nach einem der Ansprüche 1 bis 4, **dadurch gekennzeichnet, dass** das elastische Element (15) wenigstens ein Federteil aus zugeschnittenem und gefaltetem Blech umfasst.

6. Wärmeregulierungsvorrichtung eines Batteriepacks (1) für ein Kraftfahrzeug nach Anspruch 5, **dadurch gekennzeichnet, dass** das Federteil (15) eine langgestreckte rechteckige Form mit U-förmigem Querschnitt aufweist, umfassend mehrere Stützlaschen (21) mit kegelstumpfförmiger Form, deren Spitze parallel zur Breite des Federteils (15) ist und Versteifungstraversen bilden.

7. Wärmeregulierungsvorrichtung eines Batteriepacks (1) für ein Kraftfahrzeug nach Anspruch 5 oder 6, **dadurch gekennzeichnet, dass** die U-förmigen freien Enden (23) des Federteils (15) zueinander hin gebogen sind, um mit komplementären seitlichen Nuten (25) des Formteils aus Kunststoff (13) zusammenzuwirken, was eine mechanische Verbindung zwischen dem Federteil (15) und dem Formteil aus Kunststoff (13) ermöglicht.

8. Wärmeregulierungsvorrichtung eines Batteriepacks (1) für ein Kraftfahrzeug nach einem der Ansprüche 1 bis 5, **dadurch gekennzeichnet, dass** das Federteil (15) im Querschnitt eine kegelstumpfförmige Form aufweist.

9. Wärmeregulierungsvorrichtung eines Batteriepacks (1) für ein Kraftfahrzeug nach einem der Ansprüche 1 bis 5, **dadurch gekennzeichnet, dass** das Federteil (15) einen langgestreckten mittigen Rumpf (29) aufweist, der eine Vielzahl von elastischen Stützlaschen (21) aufweist, die zum Boden (14) des Gehäuses (3) des Batteriepacks (1) gerichtet sind.

10. Wärmeregulierungsvorrichtung eines Batteriepacks (1) für ein Kraftfahrzeug nach Anspruch 9, **dadurch gekennzeichnet, dass** die elastischen Stützlaschen (21) des Federteils (15) auf versetzte Weise beiderseits des mittigen Rumpfs (29) des Federteils (15) verteilt sind.

11. Wärmeregulierungsvorrichtung eines Batteriepacks für ein Kraftfahrzeug nach einem der Ansprüche 1 bis 10, **dadurch gekennzeichnet, dass** das Federteil (15) Montagemittel (30) umfasst, um mit komplementären Montagemitteln (32) des Formteils aus Kunststoff (13) zusammenzuwirken, mit dem das Federteil (15) verbunden ist.

12. Batteriepack (1) für ein Kraftfahrzeug, umfassend eine in einem Gehäuse (3) positionierte Batterie (5), das eine Wärmeregulierungsvorrichtung nach einem der vorhergehenden Ansprüche aufweist.

## Claims

1. Thermal regulation device for a battery pack (1) for a motor vehicle comprising at least one battery (5) contained in a casing (3), the thermal regulation device comprising:
- at least one heat exchanger (9) in contact with the battery (5),
- at least one elastic element (15) arranged in the bottom (14) of the casing (3) in order to hold the heat exchanger (9) against the battery (5),
**characterized in that** an insulant (13) is interposed between the elastic element (15) and the heat exchanger (9), the insulant (13) being a molded plastic component, the heat exchanger (9) having pipes (10) **characterized in that** the insulant (13) is attached to each pipe (10) of the heat exchanger (9), the insulant (13) covering the surface of the pipe (10) opposite the surface that is in contact with the battery (5), the molded plastic component (13) having elastic hooks (19) for attaching the molded plastic component (13) to the pipe (10).

2. Thermal regulation device for a battery pack (1) for a motor vehicle according to Claim 1, **characterized in that** the molded plastic component (13) is made of polypropylene or polyamide reinforced with glass fiber.

3. Thermal regulation device for a battery pack (1) for a motor vehicle according to any one of Claims 1 and 2, **characterized in that** the insulant (13) has spacers (16) used to provide additional air-gap thermal insulation for the pipe (10).

4. Thermal regulation device for a battery pack (1) for a motor vehicle according to Claim 3, **characterized in that** the spacers (16) of the insulant (13) include longitudinal ribs (18).

5. Thermal regulation device for a battery pack (1) for a motor vehicle according to any one of Claims 1 to 4, **characterized in that** the elastic element (15) includes at least one spring component made of cut and folded sheet metal.

6. Thermal regulation device for a battery pack (1) for a motor vehicle according to Claim 5, **characterized in that** the spring component (15) has a longitudinal rectangular shape with a U-shaped cross section, comprising a plurality of tapered support legs (21), the tops of which are parallel to the width of the spring component (15) and form stiffening cross members.

7. Thermal regulation device for a battery pack (1) for a motor vehicle according to Claim 5 or 6, **characterized in that** the U-shaped free extremities (23) of the spring component (15) are folded towards one another to cooperate with the matching lateral grooves (25) in the molded plastic component (13), thereby enabling a mechanical connection between the spring component (15) and the molded plastic component (13) .

8. Thermal regulation device for a battery pack (1) for a motor vehicle according to any one of Claims 1 to 5, **characterized in that** the cross section of the spring component (15) is tapered.

9. Thermal regulation device for a battery pack (1) for a motor vehicle according to any one of Claims 1 to 5, **characterized in that** the spring component (15) has a longitudinal central trunk (29) with a plurality of elastic support legs (21) oriented towards the bottom (14) of the casing (3) of the battery pack (1).

10. Thermal regulation device for a battery pack (1) for a motor vehicle according to Claim 9, **characterized in that** the elastic support legs (21) of the spring component (15) are staggered on either side of the central trunk (29) of said spring component (15).

11. Thermal regulation device for a battery pack for a motor vehicle according to any one of Claims 1 to 10, **characterized in that** the spring component (15) includes assembly means (30) to cooperate with the complementary assembly means (32) of the molded plastic component (13) to which said spring component (15) is attached.

12. Battery pack (1) for a motor vehicle comprising a battery (5) positioned in a casing (3), including a thermal regulation device according to any one of the preceding claims.
